(19) 

**Europäisches Patentamt**
**European Patent Office**
**Office européen des brevets**

(11) **EP 4 269 688 A1**

(12) **EUROPEAN PATENT APPLICATION**
published in accordance with Art. 153(4) EPC

(43) Date of publication:
**01.11.2023 Bulletin 2023/44**

(21) Application number: **21915292.3**

(22) Date of filing: **27.12.2021**

(51) International Patent Classification (IPC):
*D21C 9/18* (2006.01)   *C08B 15/04* (2006.01)
*C08B 15/08* (2006.01)   *C08J 3/21* (2006.01)
*D21H 11/20* (2006.01)   *D21H 15/02* (2006.01)

(52) Cooperative Patent Classification (CPC):
**C08B 15/04; C08B 15/08; C08J 3/21; D21C 9/18;**
**D21H 11/20; D21H 15/02**

(86) International application number:
**PCT/JP2021/048681**

(87) International publication number:
**WO 2022/145434 (07.07.2022 Gazette 2022/27)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.12.2020 JP 2020219393**

(71) Applicant: **Kao Corporation**
**Chuo-ku**
**Tokyo 103-8210 (JP)**

(72) Inventors:
• **YAMAMOTO, Ryohta**
**Wakayama-shi, Wakayama (JP)**
• **SAITO, Junnosuke**
**Wakayama-shi, Wakayama (JP)**

(74) Representative: **Hoffmann Eitle**
**Patent- und Rechtsanwälte PartmbB**
**Arabellastraße 30**
**81925 München (DE)**

(54) **MODIFIED CELLULOSE FIBER CAKE MANUFACTURING METHOD**

(57) The present invention relates to a method for producing a denatured cellulose fiber cake including carrying out a solid-liquid separation of a dispersion containing denatured cellulose fibers under the conditions of a centrifugal force of a centrifuge of 50 G or more and 600 G or less (step A). According to the present invention, a new method for producing a resin composition containing denatured cellulose fibers, and a new method for producing a denatured cellulose fiber cake, a shortened anionically denatured cellulose fiber cake, modified cellulose fibers, or fine cellulose fibers which can be used therefor can be provided.

EP 4 269 688 A1

**Description**

FIELD OF THE INVENTION

The present invention relates to a method for producing a denatured cellulose fiber cake.

BACKGROUND OF THE INVENTION

Conventionally, plastic materials derived from limited source petroleum have been widely used. However, recently, techniques that are environmental-friendly have been spotlighted. Under the technical background, materials using cellulose fibers which are biomass abundantly existing in nature have been remarked.

Since a dispersion of cellulose fibers is highly viscous, when the dispersion of cellulose fibers is mixed with a paint containing a resin, the mixture is drastically thickened, thereby making it difficult to apply the paint. For this reason, a method of lowering a viscosity of a dispersion of cellulose fibers by shortening a fiber length of cellulose fibers has been known.

For example, as a method of shortening cellulose fibers, Patent Publication 1 discloses a method of cleaving sugar chains of anionically denatured cellulose fibers by a thermal decomposition with a solvent containing water.

Patent Publication 1: WO 2019/235557

SUMMARY OF THE INVENTION

The present invention relates to the following [1] to [6]:

[1] A method for producing a denatured cellulose fiber cake including carrying out a solid-liquid separation of a dispersion containing denatured cellulose fibers under the conditions of a centrifugal force of a centrifuge of 50 G or more and 600 G or less (step A).

[2] A method for producing a shortened anionically denatured cellulose fiber cake including

carrying out a thermal decomposition treatment of anionically denatured cellulose fibers under the temperature conditions of 50°C or higher and 230°C or lower, thereby obtaining shortened anionically denatured cellulose fibers; and

carrying out a solid-liquid separation of a dispersion containing the shortened anionically denatured cellulose fibers under the conditions of a centrifugal force of a centrifuge of 50 G or more and 600 G or less (step A).

[3] A method for producing modified cellulose fibers including introducing a modifying group to denatured cellulose fibers in the cake produced by a method for production as defined in the above [1], or to shortened anionically denatured cellulose fibers in the cake produced by a method for production as defined in the above [2].

[4] A method for producing fine cellulose fibers having an average fiber length of 50 nm or more and 300 nm or less, including carrying out a finely pulverizing treatment of a denatured cellulose fiber cake produced by a method for production as defined in the above [1], a shortened anionically denatured cellulose fiber cake produced by a method for production as defined in the above [2], or modified cellulose fibers produced by a method for production as defined in the above [3].

[5] A method for producing a resin composition including mixing a denatured cellulose fiber cake produced by a method for production as defined in the above [1], a shortened anionically denatured cellulose fiber cake produced by a method for production as defined in the above [2], modified cellulose fibers produced by a method for production as defined in the above [3], or fine cellulose fibers produced by a method for production as defined in the above [4], and a resin.

[6] A method for producing a resin composition including mixing a denatured cellulose fiber cake produced by a method for production as defined in the above [1], or a shortened anionically denatured cellulose fiber cake produced by a method for production as defined in the above [2], a compound for modification, and a resin.

BRIEF DESCRIPTION OF THE DRAWINGS

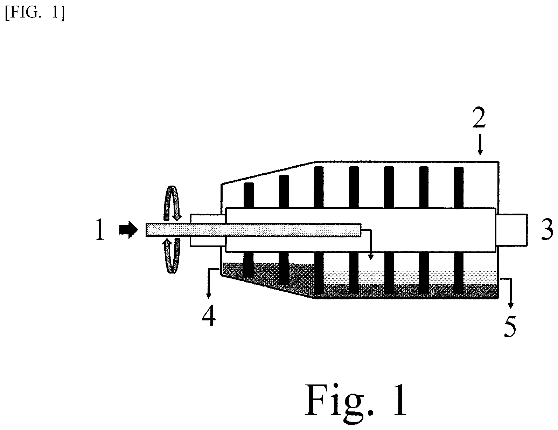

[FIG. 1] FIG. 1 is a cross-sectional view of a decanter type centrifuge.

DETAILED DESCRIPTION OF THE INVENTION

Since a water-containing solvent cannot be homogeneously mixed with a resin used for a paint or the like, replacement of a medium of cellulose fibers from water to an organic solvent is necessary. Particularly, it is remarkable in the case of shortened cellulose fibers.

In the treatment of replacing a solvent, the plural replacement treatments are usually carried out. For this reason, the amount of the solvent used increases, incurring costs not only for the solvent itself but also for disposal of the solvent after use, whereby methods with higher efficiencies have been earnestly desired.

Therefore, the present invention relates to a new method for producing a resin composition containing denatured cellulose fibers, and a new method for producing a denatured cellulose fiber cake, a shortened anionically denatured cellulose fiber cake, modified cellulose fibers, or fine cellulose fibers which can be used particularly therefor.

According to the present invention, a new method with higher efficiency for producing a resin composition containing denatured cellulose fibers, and a new method with higher efficiency for producing a denatured cellulose fiber cake, a shortened anionically denatured cellulose fiber cake, modified cellulose fibers, or fine cellulose fibers which can particularly be used therefor can be provided.

[Method for Producing Denatured Cellulose Fiber Cake]

The method for producing a denatured cellulose fiber cake of the present invention includes carrying out a solid-liquid separation of a dispersion containing denatured cellulose fibers under the conditions of a centrifugal force of a centrifuge of 50 G or more and 600 G or less (step A).

[Denatured Cellulose Fibers]

The denatured cellulose fibers can be obtained by introducing a substituent for denaturation, preferably an anionic group, according to a known method, to the raw material cellulose fibers, and preferably shortening the fiber length. The raw material cellulose fibers are preferably natural cellulose fibers from the environmental viewpoint. The natural cellulose fibers include, for example, those from wooden pulp such as pulp from needle-leaf trees and pulp from broad-leaf trees; cotton pulp from cotton linter and cotton lint; non-wooden pulp such as maize straw pulp and bagasse pulp; bacteria cellulose; and the like. The substituent is preferably an anionic group. As the anionic group, a carboxy group, a sulfonate group, and a phosphate group are preferred, and a carboxy group is more preferred, from the viewpoint of the efficiency in cleaving sugar chains.

In addition, previously carboxymethylated pulp may be mechanically defibrated, beaten, or disintegrated, to be used as denatured cellulose fibers at a stage of an average fiber diameter of 500 nm or more. However, the shortening the fibers is preferred from the viewpoint of dispersibility of a composition. As a treatment method, for example, it is possible that an aqueous dispersion of the pulp is previously concentrated by dehydration or the like (20% by weight or more), and the concentrated dispersion is subjected to a beating treatment, that the aqueous dispersion is made in a low concentration (less than 20% by weight), and then subjected to a mechanical treatment of beating, disintegration or the like, or that the aqueous dispersion is dehydrated or dried, and the residue is subjected to a mechanical treatment of defibrating or beating, or dry pulverization or the like.

One embodiment for producing known anionically denatured cellulose fibers includes, for example, a method using 2,2,6,6-tetramethyl-1-piperidin-N-oxyl (TEMPO) as a catalyst, as described in WO 2019/235557. In the method for production, a carboxy group is introduced as an anionic group to cellulose fibers by using preferably natural cellulose fibers as the raw material cellulose fibers, and TEMPO as a catalyst.

[Fiber Shortening]

The anionically denatured cellulose fibers can be shortened by a cleaving treatment of sugar chains of cellulose fibers.

As the method of cleaving sugar chains, shortened anionically denatured cellulose fibers can be obtained by carrying out a thermal decomposition treatment of anionically denatured cellulose fibers under the temperature conditions of preferably 50°C or higher and preferably 230°C or lower. The temperature conditions are more preferably 70°C or higher, and even more preferably 80°C or higher, from the viewpoint of productivity. On the other hand, the temperature conditions are more preferably 220°C or lower, and even more preferably 200°C or lower, from the viewpoint of inhibiting excessive decomposition.

The form of the denatured cellulose fibers used in step A thus obtained is previously shortened denatured cellulose fibers, and preferably previously shortened anionically denatured cellulose fibers. The average fiber length of the previously shortened denatured cellulose fibers thus obtained is preferably 50 $\mu$m or more, and more preferably 150 $\mu$m or more, from the viewpoint of productivity. On the other hand, the average fiber length is preferably 500 $\mu$m or less, and more preferably 300 $\mu$m or less, from the viewpoint of dispersibility of denatured cellulose fibers in a resin composition.

Therefore, one preferred embodiment of the method for producing a denatured cellulose fiber cake of the present invention is a method for producing a shortened anionically denatured cellulose fiber cake including

carrying out a thermal decomposition treatment of anionically denatured cellulose fibers under the temperature conditions of 50°C or higher and 230°C or lower, thereby obtaining shortened anionically denatured cellulose fibers, and

carrying out a solid-liquid separation of a dispersion containing the shortened anionically denatured cellulose fibers under the conditions of a centrifugal force of a centrifuge of 50 G or more and 600 G or less (step A).

The thermal decomposition treatment is carried out in a state that the anionically denatured cellulose fibers are mixed with or dispersed in a medium. The medium which is preferably used includes water, N,N-dimethylformamide (DMF), ethanol, isopropanol (IPA), methyl ethyl ketone (MEK), ethyl acetate, toluene, cyclohexanone, and the like. These media can be used alone or in a combination of two or more kinds. Among them, a water-containing solvent is preferred, from the viewpoint of handling properties and costs. In the water-containing solvent, the proportion of water in the solvent is preferably 50% by mass or more, more preferably 80% by mass or more, even more preferably 95% by mass or more, and even more preferably 100% by mass, from the viewpoint of handling properties and costs.

[step A]

The dispersion of denatured cellulose fibers thus obtained can be used in step A. The denatured cellulose fibers used in step A are preferably anionically denatured cellulose fibers, more preferably anionically denatured cellulose fibers that are subjected to an oxidization treatment with TEMPO, and even more preferably shortened anionically denatured cellulose fibers that are subjected to an oxidization treatment with TEMPO.

The medium used in the dispersion preferably includes water, N,N-dimethylformamide (DMF), ethanol, isopropanol (IPA), methyl ethyl ketone (MEK), ethyl acetate, toluene, cyclohexanone, and the like. These media can be used alone or in a combination of two or more kinds. Among them, a water-containing solvent is preferred, from the viewpoint of handling properties and costs. In the water-containing solvent, the proportion of water in the solvent is preferably 50% by mass or more, more preferably 80% by mass or more, even more preferably 95% by mass or more, and even more preferably 100% by mass, from the viewpoint of handling properties and costs.

The content of the denatured cellulose fibers in the dispersion is obtained as a solid ingredient content. The solid ingredient content in the dispersion is preferably 0.1% by mass or more, more preferably 1.0% by mass or more, and even more preferably 5.0% by mass or more, from the viewpoint of productivity. On the other hand, although the upper limit is not particularly limited, it is preferably 80% by mass or less, more preferably 60% by mass or less, and even more preferably 40% by mass or less, from the viewpoint of handling properties.

The method of measuring the content of the denatured cellulose fibers in the dispersion employs a method described in Examples set forth later.

In step A, a solid-liquid separation of the dispersion containing denatured cellulose fibers is carried out by using a centrifuge.

The centrifugal force of the centrifuge is 50 G or more, preferably 80 G or more, and more preferably 200 G or more, from the viewpoint of lowering the water concentration in a resin composition. On the other hand, the centrifugal force is 600 G or less, and preferably 550 G or less, and more preferably 400 G or less, from the viewpoint of discharging a cellulose fiber cake from the centrifuge.

The centrifugal force of the centrifuge as used herein can be set to a desired level by adjusting a rotational speed of a rotary sleeve.

Various types of known centrifuges can be used in step A. In addition, a batch-process operating centrifuge and a continuous centrifuge which can continuously be operated can be used. However, the continuous centrifuge is preferred, from the viewpoint of operation efficiency.

Specific examples of the centrifuge used in step A include batch-process centrifuges such as a syphon type centrifuge, a basket type centrifuge, and a disc separation type centrifuge; and continuous centrifuges such as a decanter type centrifuge, a de-cone type centrifuge, a multistage type centrifuge, and a disc separation type centrifuge. Among them, the multistage type centrifuge is preferred, the de-cone type and the decanter type centrifuge are more preferred, and the decanter type centrifuge is even more preferred, from the viewpoint of operation efficiency.

FIG. 1 is a view schematically showing a cross-section of a decanter type centrifuge.

For example, in a case of a dispersion containing shortened anionically denatured cellulose fibers as denatured cellulose fibers, the dispersion is fed to a decanter type centrifuge as a feeding slurry 1. The decanter type centrifuge can give the dispersion a centrifugal force by rotating a rotary sleeve 2, whereby a solid-liquid in the dispersion can be separated. In addition, the dispersion having an increased content of the shortened anionically denatured cellulose fibers is gradually transferred to a cake discharge outlet by rotating a screw 3 at a slightly slower speed than the rotary sleeve, and recovered as a cake 4. On the other hand, the dispersion in which much of fibrous components are removed is recovered as a separation liquid 5.

The feeding rate of a feeding slurry 1 can be set at a desired level, for example, by connecting a feed pump (not shown in the figure) with the decanter type centrifuge.

For example, the feeding rate of a feeding slurry 1 in a case where a decanter type centrifuge is used is preferably 500 L/h or less, more preferably 300 L/h or less, and even more preferably 100 L/h or less, from the viewpoint of extending the residence time of the feeding slurry in the device to enhance separability, and avoiding the cellulose fibers from flowing out to the separation liquid. On the other hand, the feeding rate is preferably 100 L/h or more, more preferably 300 L/h or more, and even more preferably 500 L/h or more, from the viewpoint of improving productivity. In addition, the preferred ranges mentioned above can be appropriately changed according to the device size.

By using the centrifuge as described above, the solid-liquid separation of the dispersion is achieved, whereby a denatured cellulose fiber cake can be produced.

"A solid-liquid separation" as used herein means that the solvent component in the dispersion of the denatured cellulose fibers is removed, so that the content of the denatured cellulose fibers is increased. The solid ingredient content in a cake after the solid-liquid separation is preferably large, because the concentration of the denatured cellulose fibers or the modified cellulose fibers in a resin composition can be increased. Specifically, the solid ingredient content is preferably 5% by mass or more, more preferably 9% by mass or more, even more preferably 15% by mass or more, and even more preferably 20% by mass or more. On the other hand, the solid ingredient content is preferably 80% by mass or less, more preferably 60% by mass or less, and even more preferably 40% by mass or less, from the viewpoint of handling properties.

[Denaturation]

Since the denatured cellulose fiber cake produced by the method for production of the present invention has a sufficiently reduced water content, the cake can be directly mixed with a resin. In addition, the denaturation of the denatured cellulose fiber cake as used herein can be carried out with various kinds of substituents, and preferably denaturation with an anionic group. Also, a treatment of previously shortening a chain length of the denatured cellulose fibers may also be carried out. Moreover, the modified cellulose fibers can be made by fiber shortening, and further binding a modifying group to an anionically denatured cellulose fiber cake. After the treatment described above, it is possible to blend with a resin. Further, it can also be blended with a resin after further finely pulverizing a shortened anionically denatured cellulose fiber cake or modified cellulose fibers.

On the other hand, in the method for production of the present invention, a carboxylated (oxidized) cellulose can be used as a chemically denatured cellulose. For example, a cationically denatured cellulose can be obtained by reacting a raw material cellulose with a cationization agent such as glycidyltrimethylammonium chloride, a 3-chloro-2-hydroxypropyltrialkylammonium hydride, or a halohydrin form thereof and an alkali metal hydroxide (sodium hydroxide, potassium hydroxide) as a catalyst in the presence of water or an alcohol having 1 to 4 carbon atoms.

[Method for Producing Modified Cellulose Fibers]

The modified cellulose fibers in the present invention can be produced by a known method. The modified cellulose fibers refer to cellulose fiber derivatives in which denatured cellulose fibers are further bound with a modifying group.

More specifically, the modified cellulose fibers can be obtained by reacting a compound having a desired modifying group (a compound for modification) with denatured cellulose fibers or shortened anionically denatured cellulose fibers in a cake obtained by the method for production of the present invention mentioned above, and introducing the modifying group to the cellulose fibers.

In a case where the binding form of denatured cellulose fibers and a compound for modification is an ionic bonding, the compound for modification includes primary amines, secondary amines, tertiary amines, quaternary ammonium compounds, phosphonium compounds, and the like. To these compounds, various hydrocarbon groups, for example, hydrocarbon groups such as chained saturated hydrocarbon groups, chained unsaturated hydrocarbon groups, cyclic saturated hydrocarbon groups, and aromatic hydrocarbon groups, and a copolymer moiety or the like can be introduced as a modifying group. These groups or moieties may be introduced alone or in a combination of two or more kinds.

In a case where the binding form is a covalent bonding, a suitable compound for modification is employed depending upon modification of an anionic group or a hydroxy group. In a case where an anionic group is modified, for example, an anionic group is modified via an amide bonding, it is preferable to use, for example, primary amines and secondary amines as a compound for modification. When an anionic group is modified via an ester bonding, it is preferable to use, for example, an alcohol such as butanol, octanol, and dodecanol as a compound for modification. When an anionic group is modified via a urethane bonding, it is preferable to use, for example, an isocyanate compound as a compound for modification. To these compounds, various hydrocarbon groups, for example, hydrocarbon groups such as chained saturated hydrocarbon groups, chained unsaturated hydrocarbon groups, cyclic saturated hydrocarbon groups, and aromatic hydrocarbon groups, and a copolymer moiety can be introduced as a modifying group. These groups or moieties may be introduced alone or in a combination of two or more kinds.

In a case where a hydroxy group is modified, for example, a hydroxy group is modified via an ester bonding, it is preferable to use, for example, an acid anhydride (e.g., acetic anhydride, propionic anhydride), or an acid halide (e.g., capryloyl chloride, lauric acid chloride, and stearoyl chloride) as a compound for modification. In a case where a hydroxy group is modified via an ether bonding, preferred are, for example, epoxy compounds (e.g., alkylene oxides and alkyl glycidyl ethers), alkyl halides and derivatives thereof (e.g., methyl chloride, ethyl chloride, and octadecyl chloride) as a compound for modification. In a case where a hydroxy group is modified via a urethane bonding, it is preferable to use, for example, an isocyanate compound as a compound for modification. These compounds can be introduced as a modifying group with various hydrocarbon groups, including, for example, hydrocarbon groups such as chained saturated hydrocarbon groups, chained unsaturated hydrocarbon groups, cyclic saturated hydrocarbon groups, and aromatic hydrocarbon groups, or a copolymer moiety or the like. These groups or moieties may be introduced alone or in a combination of two or more kinds.

[Method for Producing Fine Cellulose Fibers]

The denatured cellulose fiber cake, the shortened anionically denatured cellulose fiber cake, or the modified cellulose fibers, each obtained by the method for production of the present invention can be further optionally subjected to a finely pulverizing treatment, and used as nano-scaled fine cellulose fibers (nanofibers). The further finely pulverizing treatment includes mechanical finely pulverizing treatments with a disintegrator, a beating machine, a low-pressure homogenizer, a high-pressure homogenizer, a grinder, a cutter mill, a ball-mill, a jet mill, a short shaft extruder, a twin-screw extruder, an ultrasonic agitator, a juice mixer for households, or the like.

By forming the denatured cellulose fibers obtained by the method for production of the present invention into nanofibers, finely pulverized cellulose fibers having an average fiber length of preferably 50 nm or more and 300 nm or less, and an average fiber diameter of preferably 2 nm or more and 10 nm or less can be obtained. The average fiber length, the average fiber diameter, and the average aspect ratio of the fine cellulose fibers as mentioned above can be measured with an atomic force microscope (AFM, Nanoscope III Tapping mode AFM, manufactured by Digital Instrument, a probe used being Point Probe (NCH) manufactured by NANOSENSORS).

[Method for Producing Resin Composition]

A resin composition can be produced by mixing various types of cellulose fibers obtained by the method described above (i.e. a denatured cellulose fiber cake, a shortened anionically denatured cellulose fiber cake, modified cellulose fibers, and fine cellulose fibers), with various types of resins, a solvent, and a further optional component.

From the viewpoint of efficiency of operating steps, a modification treatment of (preferably anionically) denatured cellulose fibers, more preferably shortened anionically denatured cellulose fibers may be carried out concurrently with blending them with the resin. In this case, a method for producing a resin composition including mixing denatured cellulose fiber cake or a shortened anionically denatured cellulose fiber cake produced by the method for production of the present invention, a compound for modification and a resin is provided, and subsequently a finely pulverizing treatment may be carried out.

The content of the cellulose fibers (conversion amount) in the resin composition is preferably 0.1% by mass or more, more preferably 0.5% by mass or more, even more preferably 1% by mass or more, and even more preferably 3% by mass or more, from the viewpoint of inhibiting the shrinkage during curing of the cellulose fiber-containing resin having the solvent component removed from the resin composition, and providing mechanical strength. On the other hand, the content of the cellulose fibers is preferably 20% by mass or less, more preferably 15% by mass or less, and even more preferably 8% by mass or less, from the viewpoint of avoiding the lowering of handling properties due to an increase in the viscosity of the resin composition.

The cellulose fibers (conversion amount) refer to the mass calculated by the mass of various types of cellulose fibers (i.e. modified cellulose fibers and fine cellulose fibers) bound with a modifying group minus the mass of a modifying group. The cellulose fibers (conversion amount) in various types of cellulose fibers bound with a modifying group can be measured in accordance with the method described in Examples set forth below.

The resin which can be used in the resin composition is not particularly limited, so long as the resin is conventionally used as a base resin for non-aqueous paints, and various resins can be blended.

Specific examples of the resin include alkyd resins, acrylic resins, acrylic urethane resins, melamine resins, urethane resins, epoxy resins, coumarone resins, urea resins, phenolic resins, vinyl chloride resins, phenoxy resins, silicone resins, fluororesins, nylon resins, styrenebutadiene resins, nitrile-butadiene resins, petroleum resins, rosin, drying oils, boiled oils, acetyl cellulose, nitrocellulose, and the like. Among them, acrylic resins, acrylic urethane resins, melamine resins, urethane resins, epoxy resins, urea resins, and phenolic resins are preferred, and epoxy resins and phenolic resins are more preferred, from the viewpoint of obtaining a resin composition having excellent dispersibility of the fine cellulose fibers.

The content of the resin in the resin composition is preferably 1% by mass or more, more preferably 10% by mass or more, and even more preferably 40% by mass or more, from the viewpoint of production efficiency. On the other hand, the content is preferably 90% by mass or less, more preferably 70% by mass or less, and even more preferably 50% by mass or less, from the viewpoint of lowering the viscosity.

The resin composition may further optionally contain a solvent. The solvent in the present invention includes organic solvents and organic media containing a reactive functional group.

The organic solvent includes, for example, alcohols such as methanol, ethanol, isopropyl alcohol, 2-butanol, 1-pentanol, octyl alcohol, glycerol, ethylene glycol, and propylene glycol; carboxylic acids such as acetic acid; hydrocarbons such as hexane, heptane, octane, decane, and liquid paraffins; aromatic hydrocarbons such as toluene and xylene; amides such as dimethyl sulfoxide, N,N-dimethylformamide, dimethylacetamide, and acetanilide; ketones such as acetone, methyl ethyl ketone, methyl isobutyl ketone, and cyclohexanone; halogenated products such as methylene chloride and chloroform; carbonates such as ethylene carbonate, propylene carbonate, dimethyl carbonate, and diethyl carbonate; esters such as methyl acetate, ethyl acetate, propyl acetate, butyl acetate, methyl butyrate, sorbitan fatty acid esters, polyoxyethylene sorbitan fatty acid esters, polyoxyethylene sorbitol fatty acid esters, glycerol fatty acid esters, and polyoxyethylene fatty acid esters; polyethers such as polyethylene glycol and polyoxyethylene alkyl ethers; silicone oils such as polydimethylsiloxane; acetonitrile, propionitrile, ester oil, salad oil, soybean oil, castor oil, and the like. These organic solvents can be used alone or in a combination of two or more kinds.

In addition, the organic medium containing a reactive functional group includes, for example, acrylates such as methyl acrylate, methyl methacrylate, ethyl acrylate, ethyl methacrylate, butyl acrylate, butyl methacrylate, n-hexyl acrylate, n-hexyl methacrylate, 2-ethylhexyl acrylate, 2-ethylhexyl methacrylate, and phenyl glycidyl ether acrylate; urethane prepolymers such as hexamethylene diisocyanate urethane prepolymers and phenyl glycidyl ether acrylate toluene diisocyanate urethane prepolymers; glycidyl ethers such as n-butyl glycidyl ether, 2-ethylhexyl glycidyl ether, stearyl glycidyl ether, styrene oxide, phenyl glycidyl ether, nonylphenyl glycidyl ether, butylphenyl glycidyl ether, 1,6-hexanediol diglycidyl ether, ethylene glycol diglycidyl ether, and diethylene glycol diglycidyl ether; chlorostyrene, methoxystyrene, butoxystyrene, vinylbenzoic acid, and the like.

In a case where a solvent is used, the blending amount of the solvent is preferably 50 parts by mass or more, and more preferably 100 parts by mass or more, based on 100 parts by mass of the resin, from the viewpoint of lowering of the viscosity and homogeneous miscibility of a resin and an anionically denatured cellulose fiber cake. On the other hand, the blending amount is preferably 200 parts by mass or less, and more preferably 100 parts by mass or less, based on 100 parts by mass of the resin, from the viewpoint of production efficiency.

The resin composition may further contain additives conventionally used in the field of paints. Such additives include inorganic pigments, organic pigments, dyes, curing agents, plasticizers, catalysts, mildewproof agents, defoaming agents, leveling agents, pigment dispersants, antisettling agents, anti-sagging agents, thickening agents, matting agents, photostabilizers, ultraviolet absorbents, and the like.

With respect to the above-mentioned embodiments, the present invention further discloses methods for producing a cake, methods for producing modified cellulose fibers, methods for producing fine cellulose fibers, and methods for producing a resin composition given below.

<1> A method for producing a modified cellulose fiber cake including carrying out a solid-liquid separation of a dispersion containing modified cellulose fibers under the conditions of a centrifugal force of a centrifuge of 50 G or more and 600 G or less (step A).
<2> The method for production according to the above <1>, wherein the solid ingredient content of the denatured cellulose fiber cake is 5% by mass or more.
<3> The method for production according to the above <1> or <2>, wherein the centrifuge is a continuous centrifuge.
<4> The method for production according to the above <3>, wherein the continuous centrifuge is a decanter type centrifuge.
<5> The method for production according to the above <4>, wherein the feeding rate of the denatured cellulose fiber slurry to the decanter type centrifuge is 100 L/h or more and 500L/h or less.
<6> The method for production according to any one of the above <1> to <5>, wherein the denaturation of the denatured cellulose fibers is an anionic denaturation.
<7> The method for production according to any one of the above <1> to <6>, wherein the form of the denatured cellulose fibers used in step A is the previously shortened denatured cellulose fibers.
<8> The method for production according to the above <7>, wherein the average fiber length of the previously shortened denatured cellulose fibers is 50 $\mu$m or more and 500 $\mu$m or less.

<9> The method for production according to any one of the above <1> to <8>, wherein the dispersion in step A is a medium containing water.

<10> A method for producing a shortened anionically denatured cellulose fiber cake including

carrying out a thermal decomposition treatment of anionically denatured cellulose fibers under the temperature conditions of 50°C or higher and 230°C or lower, thereby obtaining shortened anionically denatured cellulose fibers; and

carrying out a solid-liquid separation of a dispersion containing the shortened anionically denatured cellulose fibers under the conditions of a centrifugal force of a centrifuge of 50 G or more and 600 G or less (step A).

<11> The method for production according to the above <10>, wherein the medium in the thermal decomposition treatment is a medium containing water.

<12> The method for production according to the above <10> or <11>, wherein the dispersion in step A is a medium containing water.

<13> A method for producing modified cellulose fibers including introducing a modifying group to denatured cellulose fibers in a cake produced by a method for production as defined in any one of the above <1> to <9>.

<14> A method for producing modified cellulose fibers including introducing a modifying group to shortened anionically denatured cellulose fibers in a cake produced by a method for production as defined in any one of the above <10> to <12>.

<15> A method for producing fine cellulose fibers having an average fiber length of 50 nm or more and 300 nm or less, including carrying out a finely pulverizing treatment of a denatured cellulose fiber cake produced by a method for production as defined in any one of the above <1> to <9>.

<16> A method for producing fine cellulose fibers having an average fiber length of 50 nm or more and 300 nm or less, including carrying out a finely pulverizing treatment of a shortened anionically denatured cellulose fiber cake produced by a method for production as defined in any one of the above <10> to <12>.

<17> A method for producing fine cellulose fibers having an average fiber length of 50 nm or more and 300 nm or less, including carrying out a finely pulverizing treatment of modified cellulose fibers produced by a method as defined in the above <13> or <14>.

<18> A method for producing a resin composition including mixing a denatured cellulose fiber cake produced by a method for production as defined in any one of the above <1> to <9>, and a resin.

<19> A method for producing a resin composition including mixing a shortened anionically denatured cellulose fiber cake produced by a method for production as defined in any one of the above <10> to <12>, and a resin.

<20> A method for producing a resin composition including mixing modified cellulose fibers produced by a method as defined in the above <13> or <14>, and a resin.

<21> A method for producing a resin composition including mixing fine cellulose fibers produced by a method for production as defined in any one of the above < 15> to <17>, and a resin.

<22> A method for producing a resin composition including mixing a denatured cellulose fiber cake produced by a method for production as defined in any one of the above <1> to <9>, a compound for modification, and a resin.

<23> A method for producing a resin composition including mixing a shortened anionically denatured cellulose fiber cake produced by a method for production as described in any one of the above <10> to <12>, a compound for modification, and a resin.

<24> The method for producing a resin composition according to any one of the above <18> to <23>, wherein the amount of the cellulose fibers (conversion amount) in the resin composition is 0.1% by mass or more and 20% by mass or less.

<25> The method for producing a resin composition according to any one of the above <18> to <24>, wherein the resin is selected from one or more members selected from any one of acrylic resins, acrylic urethane resins, melamine resins, urethane resins, epoxy resins, urea resins, and phenolic resins.

<26> The method for producing a resin composition according to any one of the above <18> to <25>, wherein the resin composition further contains a solvent.

EXAMPLES

The present invention will be described specifically hereinbelow by means of the following Examples. Here, the following Examples are mere exemplifications of the present invention, without intending to limit the present invention thereto. Parts in Examples are parts by mass, unless specified otherwise. Here, "ambient pressure" means 101.3 kPa, and "ambient temperature" means 25°C.

[Average Fiber Length of Various Cellulose Fibers]

Ion-exchanged water is added to measurement subject cellulose fibers, to provide a dispersion, a content of which is 0.01% by mass. The dispersion is measured with a wet-dispersion type image analysis particle counter manufactured by JASCO International Co., Ltd. under the trade name of IF-3200, under the conditions of a front lens: 2 folds, a telecentric zoom lens: 0.75 folds, image resolution: 1.113 μm/pixel, a syringe inner diameter: 6515 μm, a spacer thickness: 1000 μm, image recognition mode: ghost, a threshold value: 6, an amount of analytical sample: 300 mL, and sampling: 3%. Ten thousand or more sets of cellulose fibers are measured, and an average ISO fiber length is calculated as an average fiber length.

[Anionic Group Content of Anionically Denatured Cellulose Fibers and Shortened Anionically Denatured Cellulose Fibers]

Measurement subject cellulose fibers with the mass of 0.5 g on a dry basis are placed in a 100 mL-beaker, and ion-exchanged water or a mixed solvent of methanol/water = 2/1 is added thereto to make up a total volume of 55 mL. Five milliliters of a 0.01 M aqueous sodium chloride solution is added thereto to provide a dispersion, and the dispersion is stirred until the cellulose fibers are sufficiently dispersed. A 0.1 M hydrochloric acid is added to this dispersion to adjust its pH to 2.5 to 3, and a 0.05 M aqueous sodium hydroxide solution is added dropwise to the dispersion with an automated titration instrument manufactured by DKK-TOA CORPORATION under the trade name of AUT-701, under the conditions of a waiting time of 60 seconds. The values of electroconductivity and a pH are measured every minute, and the measurements are continued up to a pH of 11 or so to obtain an electroconductivity curve. A titrated amount of sodium hydroxide is obtained from this electroconductivity curve, and the anionic group content of the measurement subject cellulose fibers is calculated in accordance with the following formula:

$$\text{Anionic Group Content, mmol/g}$$

$$= \text{Titrated Amount of Sodium Hydroxide} \times \text{Aqueous Sodium Hydroxide}$$

$$\text{Solution Concentration (0.05 M) /}$$

$$\text{Mass of Measurement Subject Cellulose Fibers (0.5 g)}$$

[Solid Ingredient Content in Various Suspensions and in Cakes After Solid-Liquid Separation]

Using a halogen moisture balance manufactured by Shimadzu Corporation under the trade name of MOC-120H, measurements with a one-gram sample are taken in a thermostat held at 150°C every 30 seconds, and a value at which the reduction in mass is 0.1% or less is defined as a solid ingredient content.

[Amount of Cellulose Fibers in Various Cellulose Fibers Bound with Modifying Group (Conversion Amount)]

The amount of the cellulose fibers in various cellulose fibers bound with a modifying group (conversion amount) refers to an amount of cellulose fibers excluding the modifying group in various cellulose fibers bound with a modifying group.
The amount of the cellulose fibers in various cellulose fibers bound with a modifying group (conversion amount) is measured by the following methods:

(1) In a case where "a compound for modification" to be added is one kind
The amount of the cellulose fibers (conversion amount) is calculated by the following formula E:

< Formula E >

Amount of Cellulose Fibers (Conversion Amount), g =

Mass of Various Cellulose Fibers Bound with Modifying Group, g /

[1 + Compound for Modification, g/mol × Binding Amount of Modifying

Group, mmol/g × 0.001]

(2) In a case where "compounds for modification" to be added are two or more kinds

The amount of the cellulose fibers (conversion amount) is calculated, taking into consideration a molar ratio of each of the compounds, i.e., a molar ratio when a total molar amount of the compounds to be added is defined as 1.

[Preparation of Anionically Denatured Cellulose Fibers]

Preparation Example 1 - Broad-Leaf Oxidized Pulp

First, 100 g of natural cellulose fibers were sufficiently stirred in 9900 g of ion-exchanged water, and 1.6 g of TEMPO, 10 g of sodium bromide, and 28.4 g of sodium hypochlorite were added in this order to 100 g of the mass of the pulp. Using a pH stud titration with an automated titration instrument manufactured by DKK-TOA CORPORATION under the trade name of AUT-701, a 0.5 M sodium hydroxide was added dropwise thereto to keep a pH at 10.5. After the reaction was carried out at 20°C for 60 minutes, the dropwise addition of sodium hydroxide was stopped, to provide anionically denatured cellulose fibers. Diluted hydrochloric acid was added to the anionically denatured cellulose fibers obtained so that the counterions were converted from sodium ions to protons. Thereafter, the protonated cellulose fibers were sufficiently washed with ion-exchanged water, and subsequently subjected to a dehydration treatment, to provide anionically denatured cellulose fibers, a solid ingredient content of which was 30.1% by mass. The resulting anionically denatured cellulose fibers had an average fiber length of 1003 μm and a content of carboxy group of 1.3 mmol/g.
The details of the raw materials and the like used in Preparation Example 1 are as follows.

Natural cellulose fibers: Broad-leaf bleached kraft pulp derived from eucalyptus manufactured by CENIBRA;
TEMPO: manufactured by ALDRICH, Free radical, 98% by mass;
Sodium hypochlorite: manufactured by Wako Pure Chemical Industries, Ltd.; and
Sodium bromide: manufactured by Wako Pure Chemical Industries, Ltd.

Example 1

A reactor equipped with anchor blades was charged with anionically denatured cellulose fibers obtained in Preparation Example 1 in an amount of 4.15 kg in an absolutely dried mass, and ion-exchanged water was added thereto until the mass of the treatment liquid became 25 kg. The treatment liquid was reacted at 95°C for 12 hours under an ambient pressure while stirring, to provide an aqueous suspension of shortened anionically denatured cellulose fibers. The resulting shortened anionically denatured cellulose fibers had an average fiber length of 157 μm.
The aqueous suspension of shortened anionically denatured cellulose fibers obtained was fed to a decanter type centrifuge, and the centrifuge was continuously operated with a centrifugal force of 300 G and a feeding rate to the decanter of 500 L/h, thereby allowing to have a solid-liquid separation, to provide a cake, a solid ingredient content of which was 22.9% by mass in a stage that became a steady state.
The amount 12.92 g of acetone and 0.56 g of polyether monoamine were added to 3.60 g of the cake obtained, and the mixture was stirred at an ambient temperature for 30 minutes, to provide an acetone dispersion of modified cellulose fibers (hereinafter referred to as CNF) in which an EOPO group was bound to a carboxy group of shortened anionically denatured cellulose fibers via an ionic bonding. Here, the EOPO group means a group having a structure in which ethylene oxides (EO) and propylene oxides (PO) were polymerized in a random or block form.
A bisphenol A type liquid epoxy resin was added in an amount of 12.92 g to the dispersion of the CNF, and the mixture was stirred at an ambient temperature for 30 minutes, to provide a paint which was a resin composition. The mass ratio of the epoxy resin to acetone in the paint was 1:1, and the content of the CNF in the paint was 6% by mass.
The details of the raw materials and the like used in Example 1 are as follows.

Polyether monoamine: Jeffamine M-2070, manufactured by HUNTSMAN, an EO/PO molar ratio of 32/10, a molecular weight of 2000; and

Bisphenol A-type liquid epoxy resin: jER828 manufactured by Mitsubishi Chemical Corporation, molecular weight of 370.

Example 2

The same procedures as in Example 1 were carried out except that a solid-liquid separation was carried out under the conditions of a centrifugal force of 100 G and a feeding rate to the decanter of 100 L/h, to provide a cake, a solid ingredient content of which was 17.3% by mass.

The amount 13.22 g of acetone and 0.37 g of the polyether monoamine were added to 3.18 g of the cake obtained, to provide a dispersion of the CNF.

The bisphenol A-type liquid epoxy resin was added in an amount of 13.22 g to the dispersion of the CNF, and the mixture was stirred at an ambient temperature for 30 minutes, to provide a paint. The mass ratio of the epoxy resin to acetone in the paint was 1:1, and the content of the CNF in the paint was 4% by mass.

Example 3

The same procedures as in Example 2 were carried out except that a solid-liquid separation was carried out under the conditions of a centrifugal force of 400 G, to provide a cake, a solid ingredient content of which was 23.5% by mass.

The amount 12.96 g of acetone and 0.56 g of the polyether monoamine were added to 3.52 g of the cake obtained, to provide a dispersion of the CNF.

The bisphenol A-type liquid epoxy resin was added in an amount of 12.96 g to the dispersion of the CNF, and the mixture was stirred at an ambient temperature for 30 minutes, to provide a paint. The mass ratio of the epoxy resin to acetone in the paint was 1:1, and the content of the CNF in the paint was 6% by mass.

Example 4

The same procedures as in Example 2 were carried out except that a solid-liquid separation was carried out under the conditions of a centrifugal force of 500 G, to provide a cake, a solid ingredient content of which was 20.1% by mass.

The amount 13.06 g of acetone and 0.46 g of the polyether monoamine were added to 3.42 g of the cake obtained, to provide a dispersion of the CNF.

The bisphenol A-type liquid epoxy resin was added in an amount of 13.06 g to the dispersion of the CNF, and the mixture was stirred, to provide a paint. The mass ratio of the epoxy resin to acetone in the paint was 1:1, and the content of the CNF in the paint was 5% by mass.

Example 5

The same procedures as in Example 1 were carried out except that a solid-liquid separation was carried out with changing an average chain length of the shortened anionically denatured cellulose fibers and a feeding rate of the aqueous suspension thereof, to provide a cake, a solid ingredient content of which was 12.1% by mass.

The amount 13.18 g of acetone and 0.27 g of the polyether monoamine were added to 3.37 g of the cake obtained, to provide a dispersion of the CNF.

The bisphenol A-type liquid epoxy resin was added in an amount of 13.18 g to the dispersion of the CNF, and the mixture was stirred, to provide a paint. The mass ratio of the epoxy resin to acetone in the paint was 1:1, and the content of the CNF in the paint was 3% by mass.

Example 6

The same procedures as in Example 5 were carried out except that the solid ingredient content in % by mass in the aqueous suspension of shortened anionically denatured cellulose fibers was 2% by mass, to provide a cake, a solid ingredient content of which was 13.1% by mass.

The amount 13.29 g of acetone and 0.28 g of the polyether monoamine were added to 3.14 g of the cake obtained, to provide a dispersion of the CNF.

The bisphenol A-type liquid epoxy resin was added in an amount of 13.29 g to the dispersion of the CNF, and the mixture was stirred, to provide a paint. The mass ratio of the epoxy resin to acetone in the paint was 1:1, and the content of the CNF in the paint was 3% by mass.

Comparative Example 1

The same procedures as in Example 1 were carried out, to provide an aqueous suspension of shortened anionically denatured cellulose fibers.

Without carrying out a solid-liquid separation of the above aqueous suspension, 12.39 g of acetone and 0.17 g of the polyether monoamine were added to 5.06 g of the aqueous suspension of shortened anionically denatured cellulose fibers, a solid ingredient content of which was 5.0% by mass, to provide a dispersion of the CNF.

The bisphenol A-type liquid epoxy resin was added in an amount of 12.39 g to the dispersion of the CNF, and the mixture was stirred at an ambient temperature for 30 minutes, to provide a paint. The mass ratio of the epoxy resin to acetone in the paint was 1:1, and the content of the CNF in the paint was 2% by mass.

Comparative Example 2

The same procedures as in Example 2 were carried out except that a solid-liquid separation was carried out under a centrifugal force of 700 G, in an attempt to carry out a solid-liquid separation. However, a cake was not discharged from a decanter type centrifuge.

Comparative Example 3

The same procedures as in Example 2 were carried out except that a solid-liquid separation was carried out under a centrifugal force of 3100 G, in an attempt to carry out a solid-liquid separation. However, a cake was not discharged from a decanter type centrifuge.

The specifications of the decanter type centrifuge used in Examples and Comparative Examples mentioned above are as follows, and the main constitution of the decanter type centrifuge roughly agrees with FIG. 1. Name of instrument: Decanter type centrifuge;

Model: Model PTM006, manufactured by TOMOE ENGINEERING CO., LTD.;
Main electromotor: 3.7 kW, 200 V, 13.8 A, INV;
Differential electromotor: 1.5 kW, 200 V, 6.0 A, INV; and
Maximal centrifugal force: 3100 G.

The specifications of the feed pump for feeding an aqueous suspension to a decanter type centrifuge, used in Examples and Comparative Examples mentioned above are as follows.

Name of instrument: HEISHIN MOHNO PUMP;
Model: Model NHL15PUN, manufactured by HEISHIN Ltd.;
Electromotor: 0.2 kW, 200 V, 1.5 A, INV; and
Maximal feeding rate: 800 L/h.

The dischargeability of the cake from a decanter type centrifuge was evaluated in accordance with the following criteria.

Dischargeability ◎: The dischargeability was evaluated as ◎ when the cake was continuously discharged from the cake discharge outlet.
Dischargeability ○: The dischargeability was evaluated as ○ when the cake was intermittently discharged from the cake discharge outlet.
Dischargeability ✕: The dischargeability was evaluated as ✕ when the cake was not discharged from the cake discharge outlet.

The uniformity of the paint was evaluated in accordance with the following criteria.

Uniformity ○: The uniformity was evaluated as ○ when the resin was uniformly dissolved and the paint was transparent according to visual confirmation.

Uniformity ✕: The uniformity was evaluated as ✕ when the paint was white turbid with the precipitates of the resin according to visual confirmation.

The main conditions and the results of Examples and Comparative Examples are shown in Table 1.

[Table 1]

Table 1

| | Ex. | | | | Comp. Ex. | | | Ex. | Ex. |
|---|---|---|---|---|---|---|---|---|---|
| | 1 | 2 | 3 | 4 | 1 | 2 | 3 | 5 | 6 |
| Solid ingredient content of aqueous suspension of shortened anionically denatured cellulose fibers, % by mass | 5 | | | | | | | 5 | 2 |
| Average fiber length, $\mu$m | 157 | | | | | | | 298 | 298 |
| Centrifugal force, G | 300 | 100 | 400 | 500 | - | 700 | 3100 | 300 | 300 |
| Feeding rate, L/h | 500 | 100 | 100 | 100 | - | 100 | 100 | 300 | 300 |
| Solid ingredient content of cake, % by mass | 22.9 | 17.3 | 23.5 | 20.1 | - | - | - | 12.1 | 13.1 |
| Dischargeability of cake | ◎ | ◎ | ○ | O | - | × | × | ◎ | ◎ |
| CNF concentration in paint | 6 | 4 | 6 | 5 | 2 | - | - | 3 | 3 |
| High concentration of CNF in paint | O | Δ | ○ | ○ | × | - | - | Δ | Δ |
| Uniformity of paint | ○ | O | ○ | ○ | × | - | - | ○ | ○ |

As shown in Table 1, in Examples 1 to 6 the cakes were discharged from a decanter type centrifuge, and the cakes obtained were sufficiently concentrated, so that the uniformity of paints was excellent even in formulations in which the CNF were blended in high concentrations to the resin. On the other hand, in Comparative Example 1 since a solid-liquid separation did not take place, the paint was not uniform even at a CNF concentration of the paint of 2% by mass. In Comparative Examples 2 and 3, the cakes were not discharged from a decanter type centrifuge due to high centrifugal forces, so that the paints could not be produced in the first place.

In addition, the upper limit concentration of the CNF in the paint shows a concentration at which the CNF could be uniformly blended in the epoxy resin, and the higher the value, the more excellent. Examples showed excellent values twice or three times more than those of Comparative Examples. Therefore, it is considered that the physical properties of the resin (mechanical strength such as elastic modulus, inhibition of shrinkage during curing) can be enhanced when used as a resin cured product by removing a solvent from the paint, when blended to a paint.

INDUSTRIAL APPLICABILITY

The (preferably anionic) denatured cellulose fibers, preferably shortened denatured cellulose fibers, obtained by a method for production of the present invention can be utilized as a reinforcing agent for providing mechanical strength to various paints and the like and as a shrinkage inhibitor during curing.

EXPLANATION OF NUMERALS

1    a feeding slurry;

2    a rotary sleeve;

3    a screw;

4    a recovered cake; and

5    a recovered separation liquid

**Claims**

1.  A method for producing a denatured cellulose fiber cake comprising carrying out a solid-liquid separation of a dispersion comprising denatured cellulose fibers under the conditions of a centrifugal force of a centrifuge of 50 G or more and 600 G or less (step A).

2.  The method for production according to claim 1, wherein the solid ingredient content of the denatured cellulose fiber cake is 5% by mass or more.

3.  The method for production according to claim 1 or 2, wherein the centrifuge is a continuous centrifuge.

4.  The method for production according to claim 3, wherein the continuous centrifuge is a decanter type centrifuge.

5.  The method for production according to any one of claims 1 to 4, wherein the denaturation of the denatured cellulose fibers is an anionic denaturation.

6.  The method for production according to any one of claims 1 to 5, wherein the form of the denatured cellulose fibers used in step A is the previously shortened denatured cellulose fibers.

7.  The method for production according to claim 6, wherein the average fiber length of the previously shortened denatured cellulose fibers is 50 $\mu$m or more and 500 $\mu$m or less.

8.  A method for producing a shortened anionically denatured cellulose fiber cake comprising carrying out a thermal decomposition treatment of anionically denatured cellulose fibers under the temperature conditions of 50°C or higher and 230°C or lower, thereby obtaining shortened anionically denatured cellulose fibers; and
    carrying out a solid-liquid separation of a dispersion comprising the shortened anionically denatured cellulose fibers under the conditions of a centrifugal force of a centrifuge of 50 G or more and 600 G or less (step A).

9.  A method for producing modified cellulose fibers comprising introducing a modifying group to denatured cellulose fibers in a cake produced by a method for production as defined in any one of claims 1 to 7, or to shortened anionically denatured cellulose fibers in a cake produced by a method for production as defined in claim 8.

10. A method for producing fine cellulose fibers having an average fiber length of 50 nm or more and 300 nm or less, comprising carrying out a finely pulverizing treatment of a denatured cellulose fiber cake produced by a method for production as defined in any one of claims 1 to 7, a shortened anionically denatured cellulose fiber cake produced by a method for production as defined in claim 8, or modified cellulose fibers produced by a method as defined in claim 9.

11. A method for producing a resin composition comprising mixing a denatured cellulose fiber cake produced by a method for production as defined in any one of claims 1 to 7, a shortened anionically denatured cellulose fiber cake produced by a method for production as defined in claim 8, modified cellulose fibers produced by a method as defined in claim 9, or fine cellulose fibers produced by a method for production as defined in claim 10, and a resin.

12. A method for producing a resin composition comprising mixing a denatured cellulose fiber cake produced by a method for production as defined in any one of claims 1 to 7, or a shortened anionically denatured cellulose fiber cake produced by a method for production as defined in claim 8, a compound for modification, and a resin.

[FIG. 1]

Fig. 1

## INTERNATIONAL SEARCH REPORT

| International application No. |
|---|
| **PCT/JP2021/048681** |

**A. CLASSIFICATION OF SUBJECT MATTER**

*D21C 9/18*(2006.01)i; *C08B 15/04*(2006.01)i; *C08B 15/08*(2006.01)i; *C08J 3/21*(2006.01)i; *D21H 11/20*(2006.01)i; *D21H 15/02*(2006.01)i

FI: D21C9/18; C08B15/04; C08B15/08; C08J3/21 CFC; D21H11/20; D21H15/02

According to International Patent Classification (IPC) or to both national classification and IPC

**B. FIELDS SEARCHED**

Minimum documentation searched (classification system followed by classification symbols)

C08B1/00-37/18, D21B1/00-1/38, D21C1/00-11/14, D21D1/00-99/00, D21F1/00-13/12, D21G1/00-9/00, D21H11/00-27/42, D21J1/00-7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-135421 A (NIPPON PAPER INDUSTRIES CO., LTD.) 30 August 2018 (2018-08-30) paragraphs [0015], [0016], example 1 | 1-7 |
| Y | | 8-12 |
| X | JP 11-500482 A (CELLCAT GMBH) 12 January 1999 (1999-01-12) claims, page 11, lines 14-16, example 22 | 1-4, 6, 7, 11 |
| Y | | 1-12 |
| X | US 2020/0255548 A1 (KIMBERLY-CLARK WORLDWIDE, INC.) 13 August 2020 (2020-08-13) claims, paragraphs [0003], [0111] | 1-7 |
| Y | | 1-12 |
| A | US 8980054 B2 (KIMBERLY-CLARK WORLDWIDE, INC.) 17 March 2015 (2015-03-17) column 7, lines 5-20, sample no. 5 | 1-12 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 February 2022** | **15 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2021/048681**

### C. DOCUMENTS CONSIDERED TO BE RELEVANT

| Category* | Citation of document, with indication, where appropriate, of the relevant passages | Relevant to claim No. |
|---|---|---|
| Y | JP 2018-044096 A (DAI ICHI KOGYO SEIYAKU CO., LTD.) 22 March 2018 (2018-03-22) claims, paragraphs [0012], [0013], [0048], examples | 1-12 |
| Y | WO 2019/235557 A1 (KAO CORP.) 12 December 2019 (2019-12-12) claims, paragraphs [0017], [0021], examples | 1-12 |
| A | JP 2017-131868 A (NIPPON PAPER INDUSTRIES CO., LTD.) 03 August 2017 (2017-08-03) | 1-12 |

Form PCT/ISA/210 (second sheet) (January 2015)

**INTERNATIONAL SEARCH REPORT**

International application No.

**PCT/JP2021/048681**

**Box No. III**      **Observations where unity of invention is lacking (Continuation of item 3 of first sheet)**

This International Searching Authority found multiple inventions in this international application, as follows:

Invention 1: Claims 1-7 and 9-12
     Claims 1 and 2 lack novelty in light of disclosures in documents 1-3, and thus do not have a special technical feature. However, claim 3, which is dependent on claim 1, has the special technical feature wherein the centrifuge is of continuous type. Accordingly, claims 1-7 and 9-12 are classified as invention 1.

Invention 2: Claim 8
     Claim 8 cannot be said to share a same or corresponding technical feature with claim 3 classified as invention 1. Furthermore, claim 8 is not substantially identical to or similarly closely related to any of the claims classified as invention 1.
     Therefore, claim 8 cannot be classified as invention 1.
     Claim 8 has the special technical feature of subjecting anion-modified cellulose fibers to pyrolysis treatment under temperature conditions of 50°C-230°C inclusive, thereby obtaining anion-modified cellulose short fibers, and thus is classified as invention 2.

1. ☐   As all required additional search fees were timely paid by the applicant, this international search report covers all searchable claims.

2. ☑   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**    ☐   The additional search fees were accompanied by the applicant's protest and, where applicable, the payment of a protest fee.

                             ☐   The additional search fees were accompanied by the applicant's protest but the applicable protest fee was not paid within the time limit specified in the invitation.

                             ☐   No protest accompanied the payment of additional search fees.

Form PCT/ISA/210 (continuation of first sheet) (January 2015)

## INTERNATIONAL SEARCH REPORT
### Information on patent family members

| International application No. |
| --- |
| **PCT/JP2021/048681** |

| Patent document cited in search report | | | Publication date (day/month/year) | Patent family member(s) | Publication date (day/month/year) |
| --- | --- | --- | --- | --- | --- |
| JP | 2018-135421 | A | 30 August 2018 | (Family: none) | |
| JP | 11-500482 | A | 12 January 1999 | US 6080277 A<br>claims, column 4, lines 23-27,<br>example 22<br>EP 811017 A1<br>CN 1181762 A<br>KR 10-1998-0702368 A | |
| US | 2020/0255548 | A1 | 13 August 2020 | KR 10-2020-0085727 A | |
| US | 8980054 | B2 | 17 March 2015 | EP 2938784 A1<br>KR 10-2015-0099592 A<br>CN 104937169 A | |
| JP | 2018-044096 | A | 22 March 2018 | (Family: none) | |
| WO | 2019/235557 | A1 | 12 December 2019 | US 2021/0054541 A1<br>claims, examples<br>CN 112166216 A<br>KR 10-2021-0018301 A | |
| JP | 2017-131868 | A | 03 August 2017 | (Family: none) | |

Form PCT/ISA/210 (patent family annex) (January 2015)

**REFERENCES CITED IN THE DESCRIPTION**

**Patent documents cited in the description**

- WO 2019235557 A